# EUROPÄISCHE PATENTSCHRIFT

(11) **EP 3 610 714 B1**
(45) Veröffentlichungstag und Bekanntmachung des Hinweises auf die Patenterteilung: **16.12.2020**
(21) Anmeldenummer: 19401027.8
(22) Anmeldetag: 05.08.2019
(51) Int. Cl.: A01C 7/04

(54) **EINZELKORNSÄAGGREGAT**
SINGLE SEED SOWING UNIT
GROUPE DE SEMOIR MONOGRAINE

(30) Priorität: 17.08.2018 DE 102018120060
(43) Veröffentlichungstag der Anmeldung: 19.02.2020
(73) Patentinhaber: Amazonen-Werke H. Dreyer GmbH & Co. KG, 49205 Hasbergen (DE)
(72) Erfinder: Bulmahn, Simon, 26655 Westerstede (DE)

(56) Entgegenhaltungen:
- AT-B1- 506 803
- DE-C2- 3 602 125
- FR-A1- 2 323 308
- FR-A1- 2 389 316

## Beschreibung

Die Erfindung betrifft eine Einzelkornsäaggregat gemäß dem Oberbegriff des Patentanspruches 1.

Ein derartiges Einzelkornsäaggregat ist in der DE 36 02 125 C2 beschrieben. Dieses Einzelkornsäaggregat ist mit weiteren Aggregaten in beabstandeter Weise an zumindest einem quer zur Fahrtrichtung ausgerichteten Tragbalken einer Einzelkornsämaschine angeordnet. Das Einzelkornsäaggregat weist zumindest einen zugeordneten Vorratsbehälter und ein in einem Gehäuse angeordnetes und angetriebenes Vereinzelungselement auf. In dem Gehäuse befindet sich ein Saatgutvorratsraum, in welchem von dem Vorratsbehälter mittels geeigneter Mittel Saatgut aus dem Vorratsbehälter zum Vereinzeln durch das Vereinzelungselement zugeführt wird. In dem unteren Bereich des Gehäuses im Bereich des Saatgutvorratsraumes befindet sich zumindest eine Saatgutentleerungsöffnung, die mittels einer Verschlussplatte verschließbar und zur Entleerung des sich in dem Saatgutvorratsraum befindlichen Saatgutes zu öffnen ist. An der einen Außenseite des Gehäuses wird in der Praxis in manchen Ausgestaltungen eine von der Saatgutentleerungsöffnung von dem Gehäuse wegführende schräg nach unten geneigte Entleerungsrutsche mittels geeigneter Anbringmittel anbringbar. Unterhalb des Endbereiches der Entleerungsrutsche ist ein Auffangbehälter zum Auffangen des Restsaatgutes zu positionieren.

Nun besteht das Problem in der Praxis darin, wenn die einzelnen Einzelkornsäaggregate relativ dicht beieinander angeordnet sind, dass die Entleerungsrutsche auf der Seite, auf der die Antriebsorgane für das jeweilige Vereinzelungselement des Aggregates angeordnet sind, von dem Bediener nur sehr schwer anzuordnen und der Öffnungsmechanismus für die Verschlussplatte nur sehr schwer zu erreichen ist.

Dies wird teilweise noch dadurch erschwert, dass zwischen einigen nebeneinanderliegenden Einzelkornsäaggregaten das nachlaufende Fahrwerk der Einzelkornsämaschine angeordnet, und so die Anordnung der Entleerungsrutsche und dadurch ein verlustfreies Entleeren des Saatgutvorratsraumes nur sehr schwer möglich ist.

Der Erfindung liegt die Aufgabe zu Grunde, eine komfortablere Entleerungsmöglichkeit des Saatgutvorratsraumes von Einzelkornsäaggregaten, insbesondere bei beengtem Bauraum zwischen nebeneinander angeordneten Aggregaten, zu schaffen.

Diese Aufgabe wird erfindungsgemäß dadurch gelöst, dass mittels der Anbringmittel die Entleerungsrutsche wahlweise auf einer der beiden gegenüberliegenden Seiten des Gehäuses des Vereinzelungsaggregate anbringbar ist.

Infolge dieser Maßnahme wird die Grundvoraussetzung dafür geschaffen, dass die Entleerungsrutsche je nach vorhandenem Bauraum zwischen benachbarten Aggregaten der Einzelkornsämaschine die Entleerungsrutsche auf der besser zugänglichen Seite des Aggregates für den Entleerungsvorgang angeordnet werden kann. Somit kann in komfortablerer Weise die Saatgutentleerung durchgeführt werden.

Hierbei ist in einer Ausführungsform vorgesehen, dass die an dem Gehäuse angebrachten Anbringmittel zumindest bezüglich der einen Seite des Gehäuses einen Saatgutleitbereich als Zwischenrutsche
zwischen der Entleerungsöffnung und dem Anfang der Entleerungsrutsche aufweist. Über die dem Anbringmittel zugeordnete Zwischenrutsche wird die Grundvoraussetzung dafür geschaffen, dass der Zwischenraum zwischen der Entleerungsöffnung und der Anbringungsstelle der Entleerungsrutsche, an welcher die Entleerungsrutsche für die Bedienungsperson gut erreichbar eingehängt werden kann, überbrückt wird. Durch die Zwischenrutsche des Anbringmittels wird also die Anbringungsstelle der Entleerungsrutsche in einen Bereich verschoben, der für die Bedienungsvorgänge für die Entleerung von dem Bediener in komfortablerer Weise als bisher erreicht werden können.

Um ein universell ausgestattete und bequem und komfortabel bedienbare Entleerungsvorrichtung zu schaffen, ist vorgesehen, dass dem Anbringmittel im Bereich direkt unterhalb der Entleerungsöffnung ein Leitelement zur wahlweisen Einstellung der Richtung der Entleerung über die Entleerungsrutsche zu der einen oder anderen Seite des Gehäuses an dem Anbringmittel angeordneten Entleerungsrutsche zugeordnet ist. Durch die entsprechende Einstellung des Leitelemente kann die Entleerungsrichtung zur Leitung des Saatgutes zu der komfortableren Seite, an der die Entleerungsrutsche angeordnet ist, durch den Bediener besser als bisher vorgenommen werden.

Eine einfache Ausgestaltung der Anordnung und Umstellmöglichkeit des Leitelementes lässt sich dadurch erreichen, dass das Leitelement vorzugsweise mittels eines eine in Arbeitsrichtung des Einzelkornsäaggregates weisenden Schwenkachse aufweisenden Schwenkanordnung vorzugsweise an dem Anbringmittel und/oder dem Gehäuse unterhalb der Entleerungsöffnung angeordnet und wahlweise in die eine oder andere seitliche Entleerungsrichtung in einstellbarer Weise schwenkbar ist.

Eine einfache Ausgestaltung und Anbringung des Adapters an dem Gehäuse lässt sich dadurch erreichen, dass das Anbringmittel als Adapter ausgebildet und mittels Befestigungsmitteln an dem Gehäuse angeordnet ist.

Um sicherzustellen, dass bei der Restentleerung des Saatgutvorratsraumes das zu entleerende Saatgut ausreichend sicher aus dem Saatgutvorratsraum in den Entleerungsbehälter über die Entleerungsrutsche geleitet werden kann, ist vorgesehen, dass der Saatgutleitbereich des Anbringmittels eine geneigte Rutschfläche von der Entleerungsöffnung zu der Entleerungsrutsche aufweist.

Bei einem Einzelkornsäaggregat, bei welchem das Gehäuse einen seitlich abnehmbaren Deckel aufweist und das Vereinzelungselement nach Abnahme des abnehmbaren Deckels von dem Gehäuse aus dem Gehäuse herausnehmbar ist, ist vorgesehen, dass das nach Abnahme des abnehmbaren Deckels von dem Gehäuse und der Herausnahme des Vereinzelungselementes aus dem Gehäuse der Saatgutvorratsraum über die an dem Anbringmittel auf der Seite des Gehäuses, auf der das Gehäuse durch den abnehmbaren Deckel geöffnet ist, angeordnete Entleerungsrutsche entleerbar ist.

Infolge dieser Maßnahme wird auch bei Einzelkornsäaggregaten, die kein Zwischenstück mit einer Zwischenrutsche aufweisen, die Entleerungsrutsche auf einer komfortabel zugänglichen Seite des Aggregates bei beengtem Bauraum anzuordnen und auch hier eine Entleerung des Saatgutvorratsraumes auf einer komfortabel zugänglichen Seite des Betroffenen Einzelkornsäaggregates zu ermöglichen.

Weitere Einzelheiten der Erfindung sind der Beispielsbeschreibung und den Zeichnungen zu entnehmen. Die Zeichnungen zeigen

Weitere Einzelheiten der Erfindung sind der Beispielsbeschreibung und den Zeichnungen zu entnehmen. Die Zeichnungen zeigen
- Fig.1: eine erfindungsgemäße Einzelkornsämaschine mit einer ersten Ausführungsform von erfindungsgemäßen Säaggregaten in perspektivischer Ansicht und in vereinfachter Prinzipdarstellung,
- Fig.2: ein Säaggregat gemäß Fig.1 in perspektivischer Ansicht von der Seite mit dem Antriebsorgan für das Vereinzelungselement und in vereinfachter Darstellung mit der Anordnung des Adapters mit der Zwischenrutsche unterhalb der Entleerungsöffnung in dem Gehäuse des Säaggregates,
- Fig.3: die Anordnung der Entleerungsrutsche an dem Adapter mit der Zwischenrutsche in ausschnittsweiser Darstellung und im perspektivischer Darstellung und vergrößertem Maßstab,
- Fig.4: das Säaggregat gemäß Fig.1 bis 3 in perspektivischer Ansicht, jedoch von der mit dem Antriebsorgan für das Vereinzelungselement abgewandten Seite mit der Anordnung des Adapters mit der Zwischenrutsche unterhalb der Entleerungsöffnung in dem Gehäuse des Säaggregates und in vereinfachter Darstellung,
- Fig.5: das Säaggregat gemäß Fig.4 und in der gleichen Ansicht, jedoch nach Abnahme des Deckels des Vereinzelung Säaggregates in der Phase vor der Anordnung der Entleerungsrutsche an dem Adapter in perspektivischer Ansicht gemäß Fig. 4,
- Fig.6: das Säaggregat entsprechend der Darstellungsweise in Fig. 5, jedoch mit der Anordnung der Entleerungsrutsche an dem Adapter,
- Fig.7: das Säaggregat entsprechend der Darstellungsweise in Fig. 6, jedoch nach Herausnahme des Vereinzelungselementes aus dem Gehäuse des Säaggregates in der Entleerungsrutsche des Saatgutvorratsraumes,
- Fig.8: die Anordnung der Entleerungsrutsche an einem anders ausgestalteten Adapter mit einer der Zwischenrutsche zugeordneten umstellbaren Leiterplatte in der Darstellungsweise nach Fig. 3 und im perspektivischer Darstellung und vergrößertem Maßstab,
- Fig.9: die Anordnung der Entleerungsrutsche an dem Adapter gemäß Fig. 8, jedoch in ausschnittsweiser Darstellung und im vergrößerten Maßstab,
- Fig.10: die Anordnung der Entleerungsrutsche an dem Adapter gemäß Fig. 8, jedoch von der mit dem Antriebsorgan für das Vereinzelungselement abgewandten Seite mit der Anordnung des Adapters mit der Zwischenrutsche unterhalb der Entleerungsöffnung in dem Gehäuse des Säaggregates und in vereinfachter Darstellung,
- Fig.11: die Anordnung des Adapters unterhalb der Entleerungsöffnung in dem Gehäuse gemäß der Darstellungsweise in Fig. 10,
- Fig.12: die Anordnung der Entleerungsrutsche an dem Adapter gemäß Fig. 10 und 11 in gleicher Darstellungsweise,
- Fig.13: die Anordnung der Entleerungsrutsche an dem Adapter gemäß Fig. 10 und 11 und der gleichen Darstellungsweise, jedoch im vergrößerten Maßstab und kleinerem Ausschnitt,
- Fig.14: die Ausgestaltung und Anordnung des Adapters mit der Zwischenrutsche und dem zugeordneten Leitelement in einer ersten Einstellvorrichtung und angeordnete Entleerungsrutsche im Schnitt XIV - XIV,
- Fig.15: die Ausgestaltung und Anordnung des Adapters mit der Zwischenrutsche und dem zugeordneten Leitelement in einer zweiten Einstellvorrichtung und angeordnete Entleerungsrutsche im Schnitt XIV - XIV.

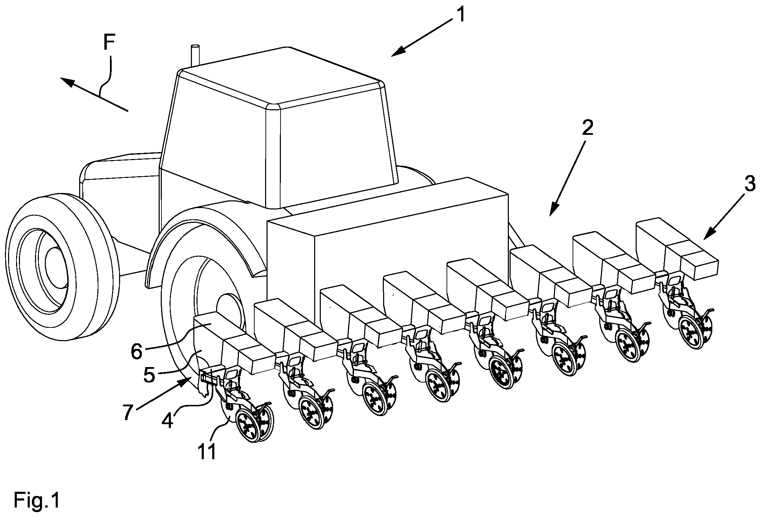

Eine landwirtschaftliche Zugmaschine 1 mit einer angehangenen Einzelkornsämaschine 2 ist in Fig.1 gezeigt. Das Gespann aus Zugmaschine 1 und Einzelkornsämaschine 2 bewegt sich im Betrieb in Fahrtrichtung F über ein nicht gezeigtes, zu bearbeitendes Feld fort und bringt dabei Saatgut auf dem Feld aus.

Zur Ausbringung von Saatgut und granularen Material umfasst die Einzelkornsämaschine 2 an ihrem in Fahrtrichtung F hinteren Ende eine Mehrzahl von quer zur Fahrtrichtung F angeordneten Einzelkornsäaggregaten 3. Die Säaggregate 3 sind am sich quer zur Fahrtrichtung F sich erstreckenden Tragbalken 4 eines Rahmens der Einzelkornsämaschine 2 befestigt, wobei der Tragbalken 4 und der Rahmen mit den daran angeordneten Einzelkornsäaggregaten 3 sich für den Straßentransport auf die zulässige Gesamtbreite einklappen oder teleskopieren lässt.

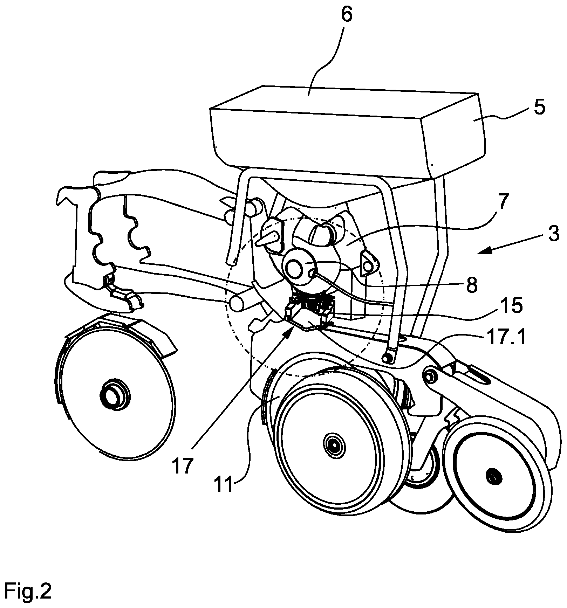

Eines der Säaggregate 3 ist in Fig.2 in perspektivischer Ansicht gezeigt. Das Säaggregat 3 umfasst an seinem vorderen Ende einen Anbauflansch 4 mittels dem es am Tragbalken 4 des Rahmens der Einzelkornsämaschine 2 in aufrechter Ebene bewegbar zu befestigen ist. Im oberen Bereich weist das Säaggregat 3 einen Vorratsbehälter 5, in dem Saatgut bevorratet ist. Der Vorratsbehälter 5 bildet einen Vorratsbereich aus und ist durch einen Deckel 6 an seinem oberen Ende verschlossen. Der Deckel 6 kann geöffnet werden, um den Vorratsbehälter 5 zu befüllen.

Unterhalb des Vorratsbehälters 5 ist an diesen direkt anschließend das Gehäuse 7 angeordnet. In dem Gehäuse 7 befindet sich das mittels einer Antriebsvorrichtung 8 angetriebene Vereinzelungselement 9. Auf der mit dem Vorratsbehälter 5 verbundenen Seite der Gehäuseinnenseite und der dieser zugewandten Seite des Vereinzelungselementes 9 befindet sich der Saatgutvorratsraum 10, in dem sich das zu vereinzelnde und zu verteilende Saatgut befindet. Über den Saatgutvorratsraum 10 wird das hier befindliche Saatgut aus dem Vorratsbehälter dem Vereinzelungselement 9 zum Vereinzeln in bekannter Weise zugeführt.

Unterhalb des Gehäuses 7 ist jeweils ein Säschar 11 zur Schaffung einer Säfurche angeordnet. In dieser Säfurche wird das von dem Vereinzelungselement 9 vereinzelte Saatgut in bekannter Weise abgelegt und mit Boden bedeckt.

In dem unteren Bereich 12 des Gehäuses im Bereich des Saatgutvorratsraumes 10 befindet sich zumindest eine Saatgutentleerungsöffnung 13. Diese ist mittels einer Verschlussplatte 14 verschließbar und zur Entleerung des sich in dem Saatgutvorratsraum 10 befindlichen Restsaatgutes zu öffnen.

An der Außenseite des Gehäuses 7 ist an dessen unteren Bereich 7.1 im Bereich der Saatgutentleerungsöffnung 13 ein als Adapter ausgebildetes Anbringmittel 15 zur Anbringung eine von dem Gehäuse 7 wegführende und schräg nach unten geneigte Entleerungsrutsche 16 anzubringen. Der als Anbringmittel ausgebildete Adapter ist mittels beispielsweise als Schrauben ausgebildeten Befestigungsmitteln an dem Gehäuse 7 angeordnet. Die Entleerungsrutsche 16 ist, wie noch weiter beschrieben ist, wahlweise auf einer der beiden gegenüberliegenden Seiten des Gehäuses 7 des Vereinzelungsaggregates 3 als Adapter 15 ausgebildetes Anbringmittel anbringbar.

Der an dem Gehäuse 7 angebrachte Adapter 15 weist zumindest bezüglich der Seite des Gehäuses 7, auf der als elektrischer Antriebsmotor ausgebildete Antriebsvorrichtung 8 angeordnet ist, einen Saatgutleitbereich 17, der als Zwischenrutsche 17.1 ausgebildet ist, zwischen der Entleerungsöffnung 13 und dem Anfang 16.1 der Entleerungsrutsche 16 auf. Der Saatgutleitbereich 17 der Zwischenrutsche 17.1 des Adapters 15 weist eine geneigte Rutschfläche von der Entleerungsöffnung 13 zu der Entleerungsrutsche 16 auf.

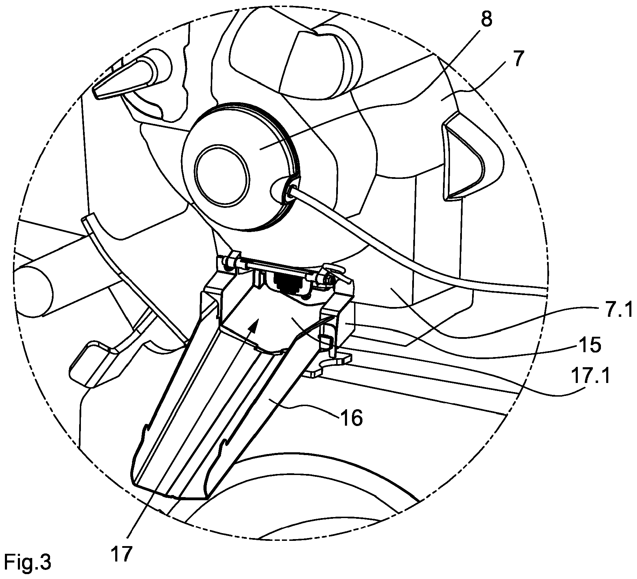

Wenn aufgrund des Bauraumes auf der Seite des Gehäuses 7, auf der als elektrischer Antriebsmotor ausgebildete Antriebsvorrichtung 8 angeordnet ist, genügend Platz zur bequemen Entleerung vorhanden ist, wird gemäß der Darstellung in der Fig. 3, die Entleerungsrutsche 16 an dem Adapter 15 eingehängt. Um jetzt den Saatgutvorratsraum 10 von dem Restsaatgut zu entleeren, wird durch Betätigen des Betätigungsmittels der Verschlussplatte 14 die Saatgutentleerungsöffnung 13 geöffnet, so dass das Restsaatgut über die Zwischenrutsche 17.1 des Adapters 15 und der Entleerungsrutsche 16 zu einem nicht dargestellten Auffangbehälter, der unterhalb dem Ende der Entleerungsrutsche sich befindet, entleert werden kann.

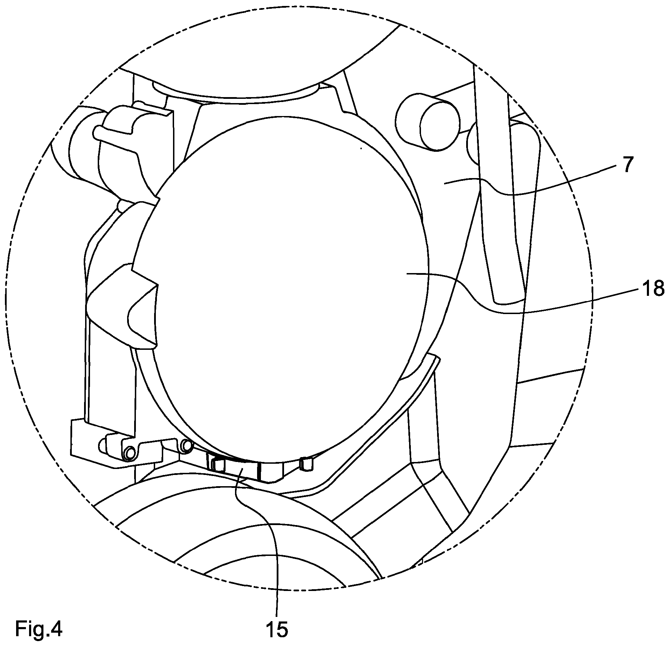

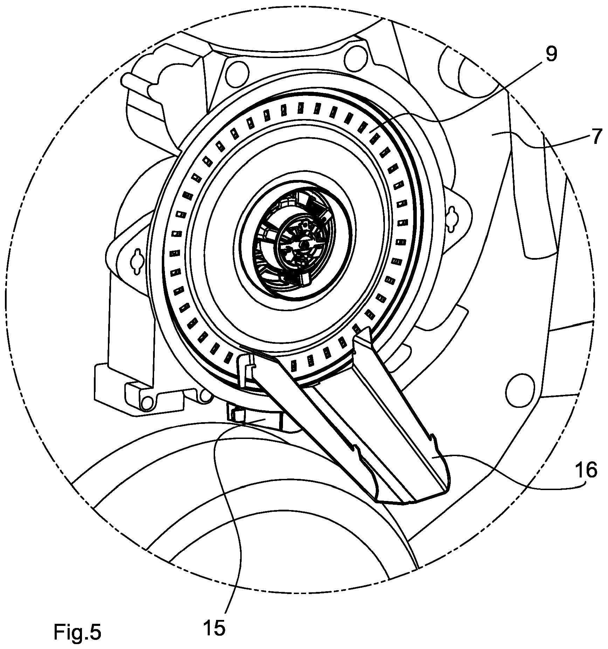

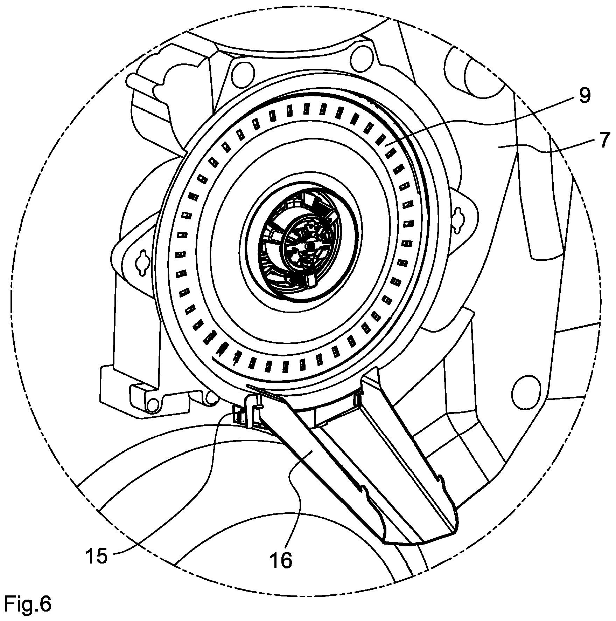

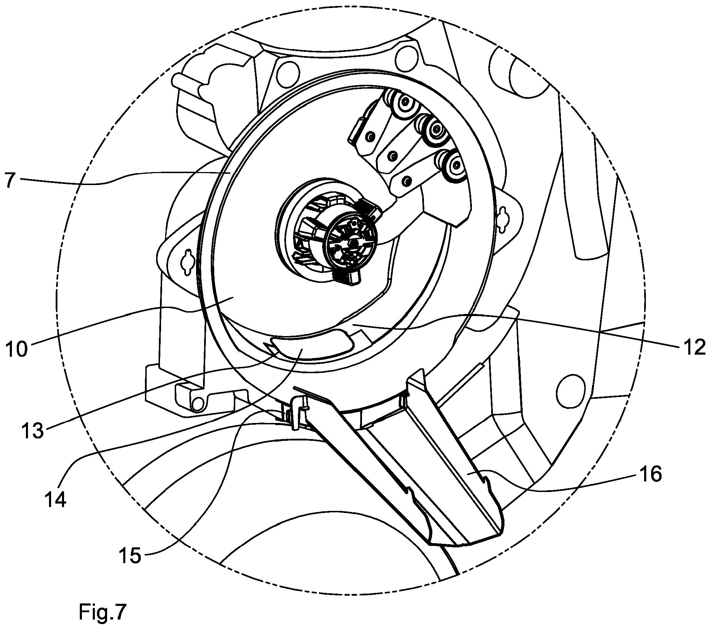

Wenn aufgrund des Bauraumes auf der Seite des Gehäuses 7, auf der sich als elektrischer Antriebsmotor ausgebildete Antriebsvorrichtung 8 angeordnet ist, die Entleerung des Restsaatgutes aus dem Saatgutvorratsraum 10 schwierig gestaltet, so lässt sich die Entleerungsrutsche 16 auf der anderen Seite des Gehäuses 7 an dem Adapter anbringen, wie in den Fig. 4 bis 7 gezeigt ist. Hierzu wird zunächst dann der in Fig. 4 noch das Gehäuse 7 des Vereinzelungsbereiches verschließende abnehmbare Deckel 18 abgenommen wird, so dass das Vereinzelungselement 9 zugänglich ist, wie die Fig.5 zeigt. Anschließend wird, wie die Fig.5 und 6 zeigen, die Entleerungsrutsche 16 an dem Adapter 15 eingehängt, so dass hierüber das Restsaatgut in einem unter dem Ende der Entleerungsrutsche 16 in nicht dargestellter Weise angeordnete Auffangbehälter entleert werden kann. Hierzu ist es dann erforderlich, dass das als Vereinzelungsscheibe ausgebildete Vereinzelungselement 9 aus dem Gehäuse 7 herausgenommen wird, wie Fig.7 zeigt. Nach der Herausnahme des Vereinzelungselementes 9 aus dem Gehäuse 7 kann dann das restliche sich noch in den Saatgutvorratsraum 10 befindliche Saatgut über die geneigte Rutschfläche der Entleerungsrutsche 16 in den vorerwähnten und nicht dargestellten Auffangbehälter gelangen.

Somit ist nach Abnahme des abnehmbaren Deckels 18 von dem Gehäuse 7 und der Herausnahme des Vereinzelungselementes 9 aus dem Gehäuse 7 der Saatgutvorratsraum 10 über die an dem Anbringmittel 15 auf der Seite des Gehäuses 7, auf der das Gehäuse 7 durch den abnehmbaren Deckel 18 geöffnet ist, angeordnete Entleerungsrutsche 16 entleerbar.

Über das als Adapter ausgebildeten Anbringmittel 15 ist die Entleerungsrutsche 16 wie vor beschrieben und gezeigt wahlweise auf einer der beiden gegenüberliegenden Seiten des Gehäuses 7 des Vereinzelungsaggregates 3 anbringbar. Hierdurch kann also der Saatgutvorratsraum des jeweiligen Vereinzelungsaggregates 3 je nach vorhandenem Bauraum möglichst komfortabel und bequem über die Entleerungsrutsche 16 wahlweise auf der einen oder anderen Seite des Säaggregates 3 entleert werden.

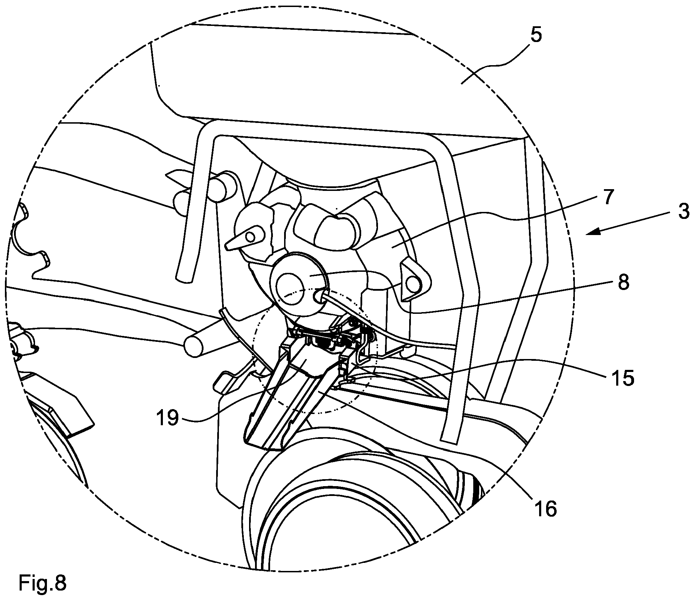

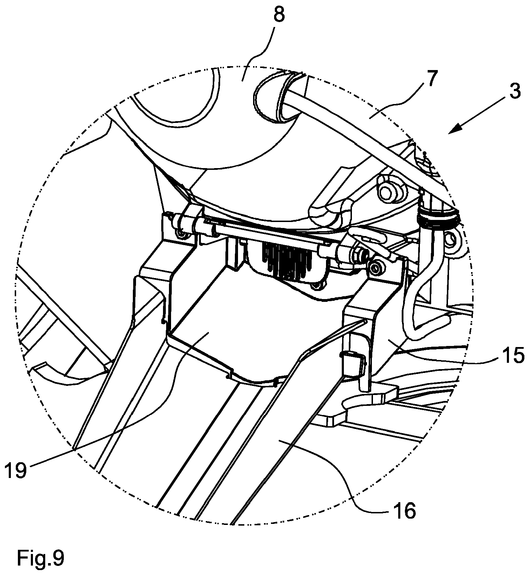

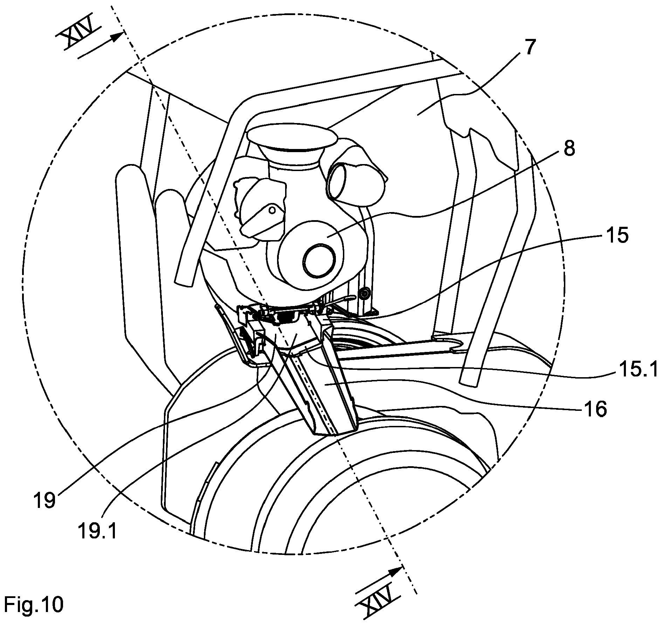

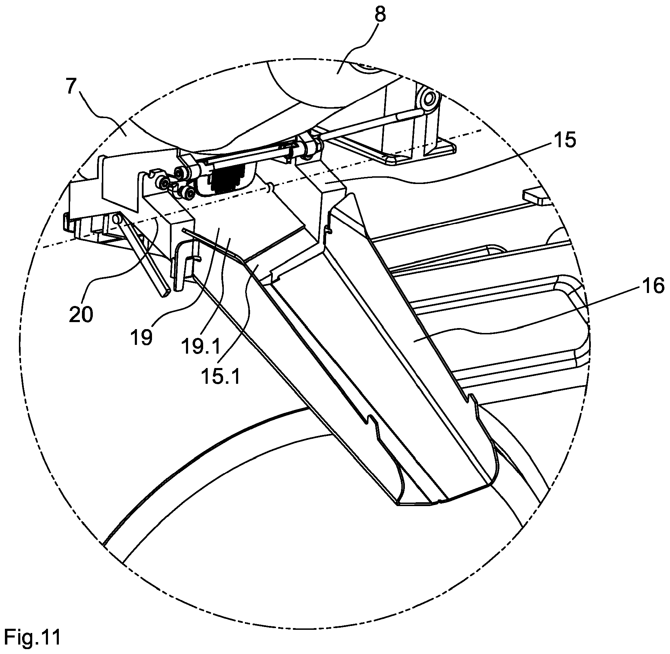

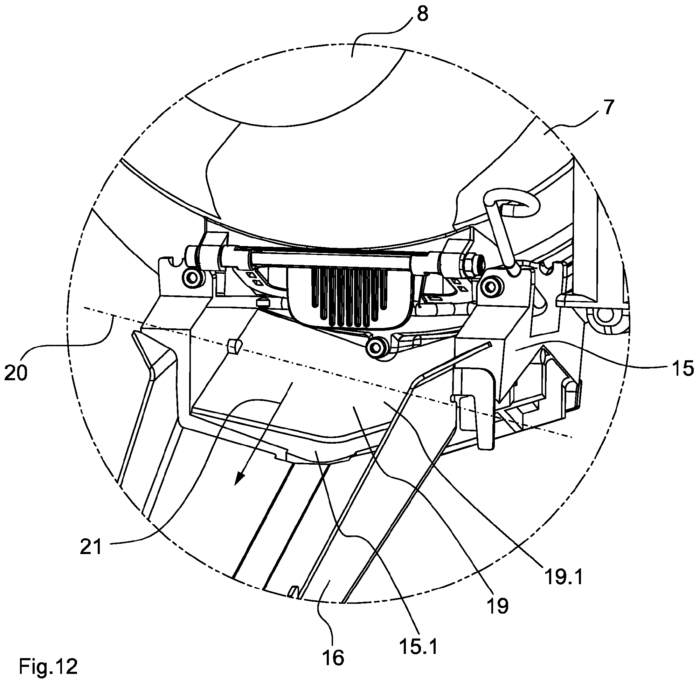

Nach dem weiteren Ausführungsbeispiel nach den Figuren 8 bis 15 ist im Bereich direkt unterhalb der Entleerungsöffnung 13 ein Leitelement 19 zur wahlweisen Einstellung der Richtung der Entleerung über die Entleerungsrutsche 16 zu der einen oder anderen Seite des Gehäuses 7 an dem als Adapter 15 ausgebildeten Anbringmittel angeordneten Entleerungsrutsche 16 zugeordnet.

Das Leitelement 19 ist mittels einer eine in Arbeitsrichtung des Einzelkornsäaggregates weisenden Schwenkachse 20 aufweisenden Schwenkanordnung an dem Adapter 15 unterhalb der Entleerungsöffnung 13angeordnet und wahlweise in die eine oder andere seitliche Entleerungsrichtung 21 oder 22 in einstellbarer Weise schwenkbar. Alternativ könnte das Leitelement 19 im Bereich des Adapters 15 auch dem Gehäuse 7 unterhalb der Entleerungsöffnung 13 angeordnet sein.

Der Adapter 15 und das Leitelement 19 weisen jeweils einen Saatgutleitbereich 15.1 und 19.1 auf, der als eine geneigte Rutschfläche von der Entleerungsöffnung 13 zu der Entleerungsrutsche 16 ausgebildet ist. Dieser Saatgutleitbereich wird zumindest teilweise von der schwenkbaren Leitfläche 19 gebildet, die dann entsprechend geneigt zu der einen oder anderen Richtung eingestellt werden kann, wie weiter unten noch beschrieben ist.

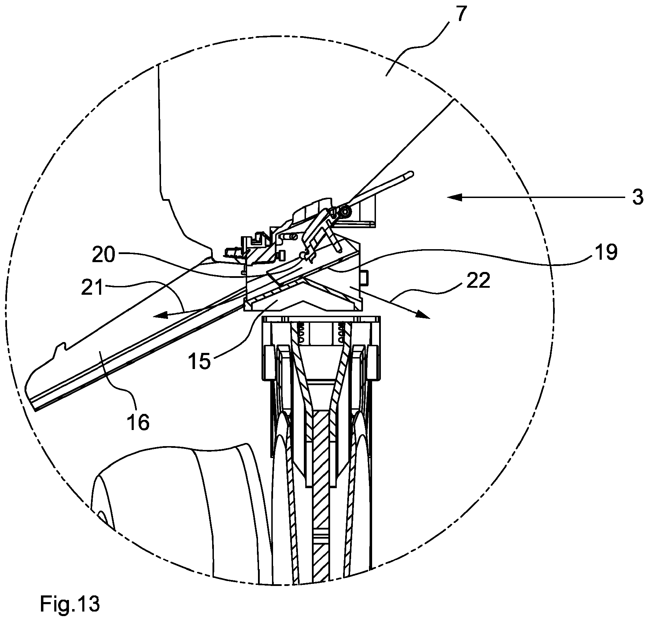

Wenn aufgrund des Bauraumes auf der Seite des Gehäuses 7, auf der als elektrischer Antriebsmotor ausgebildete Antriebsvorrichtung 8 angeordnet ist, genügend Platz zur bequemen Entleerung vorhanden ist, wird gemäß der Darstellung in der Fig. 8 bis 13, die Entleerungsrutsche 16 an dem Adapter 15 eingehängt. Weiterhin wird über entsprechende Betätigungselemente das Leitelement 19 in die in Fig. 13 dargestellte Position geschwenkt, so dass das Leitelement 19 das sich in dem Saatgutvorratsraum 10 befindet, über die Entleerungsöffnung 13 nach deren Freigabe durch wegschwenken der der als Klappe 14 ausgebildeten Verschlussplatte dieses Restsaatgut in Pfeilrichtung 21 zu der Entleerungsrutsche 16 leitet. Somit wird der Saatgutvorratsraum 10 von dem Restsaatgut entleert, nachdem durch Betätigen des Betätigungsmittels der Verschlussplatte 14 die Saatgutentleerungsöffnung 13 geöffnet ist, so dass das Restsaatgut über das Leitelement 19 des Adapters 15 und der Entleerungsrutsche 16 zu einem nicht dargestellten Auffangbehälter, der unterhalb dem Ende der Entleerungsrutsche sich befindet, entleert werden kann.

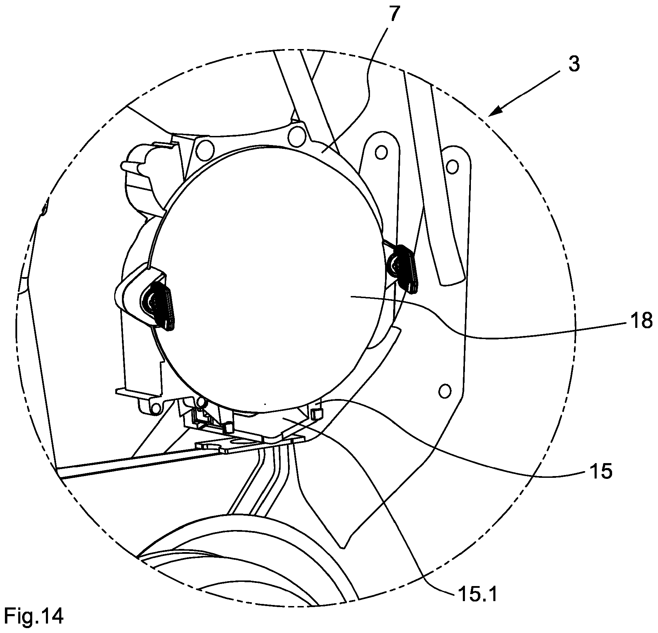

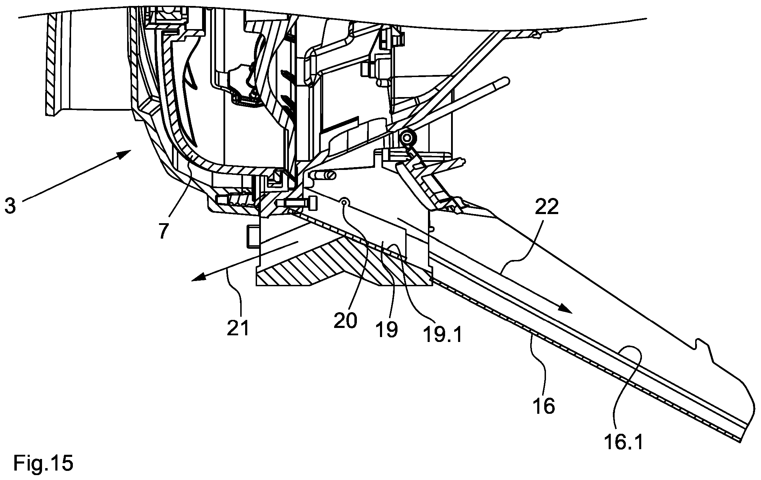

Wenn aufgrund des Bauraumes auf der Seite des Gehäuses 7, auf der sich als elektrischer Antriebsmotor ausgebildete Antriebsvorrichtung 8 angeordnet ist, die Entleerung des Restsaatgutes aus dem Saatgutvorratsraum schwierig gestaltet, so lässt sich die Entleerungsrutsche auf der anderen Seite des Gehäuses 7 an dem Adapter 15 anbringen, wie in den Fig. 14 und 15 zeigen, damit eine komfortable und bequeme Entleerung des Saatgutvorratsraumes 10 von dem Restsaatgut möglich ist.

Weiterhin wird über entsprechende Betätigungselemente das Leitelement 19 in die in Fig. 15 dargestellte Position geschwenkt, so dass das Leitelement 19 das sich in dem Saatgutvorratsraum 10 befindet, über die Entleerungsöffnung 13 nach deren Freigabe durch wegschwenken der als Klappe ausgebildeten Verschlussplatte 14 dieses Restsaatgut zu der Entleerungsrutsche 16 leitet. Somit wird der Saatgutvorratsraum 10 von dem Restsaatgut entleert, nach dem durch Betätigen des Betätigungsmittels der Verschlussplatte 14 die Saatgutentleerungsöffnung 13 geöffnet ist, so dass das Restsaatgut über das Leitelement 19 des Adapters 15 und der Entleerungsrutsche 16 zu einem nicht dargestellten Auffangbehälter, der unterhalb dem Ende der Entleerungsrutsche 16 sich befindet, entleert werden kann.

## Patentansprüche

1. Einzelkornsäaggregat (3) einer zumindest ein Einzelkornsäaggregat (3) aufweisenden Einzelkornsämaschine, mit zumindest einem zugeordneten Vorratsbehälter (5), mit einem Gehäuse (7) und in dem Gehäuse (7) angeordneten und angetriebenen Vereinzelungselement (9), einem in dem Gehäuse (7) sich befindlichen Saatgutvorratsraum (10), in welchem von dem Vorratsbehälter (5) mittels geeigneter Mittel Saatgut aus dem Vorratsbehälter zum Vereinzeln durch das Vereinzelungselement (9) zugeführt wird, zumindest einer sich in unteren Bereich des Gehäuses (7) im Bereich des Saatgutvorratsraumes (10) befindlichen Saatgutentleerungsöffnung (13), die mittels einer Verschlussplatte (14) verschließbar und zur Entleerung des sich in dem Saatgutvorratsraum (10) befindlichen Saatgutes zu öffnen ist, wobei an der Außenseite des Gehäuses (7) eine von der Saatgutentleerungsöffnung (13) von dem Gehäuse (7) wegführende schräg nach unten geneigte Entleerungsrutsche (16) mittels geeigneter Anbringmittel (15) anbringbar ist, **dadurch gekennzeichnet, dass** mittels der Anbringmittel (15) die Entleerungsrutsche (16) wahlweise auf einer der beiden gegenüberliegenden Seiten des Gehäuses (7) des Vereinzelungsaggregate (3) anbringbar ist.

2. Einzelkornsäaggregat nach Anspruch 1, **dadurch gekennzeichnet, dass** die an dem Gehäuse (7) angebrachten Anbringmittel (15) zumindest bezüglich der einen Seite des Gehäuses (7) einen Saatgutleitbereich als Zwischenrutsche zwischen der Entleerungsöffnung (13) und dem Anfang der Entleerungsrutsche (16) aufweist.

3. Einzelkornsäaggregat nach zumindest einem der vorstehenden Ansprüche, **dadurch gekennzeichnet, dass** dem Anbringmittel (15) im Bereich direkt unterhalb der Entleerungsöffnung (13) ein Leitelement (19) zur wahlweisen Einstellung der Richtung (21, 22) der Entleerung über die Entleerungsrutsche (16) zu der einen oder anderen Seite des Gehäuses (7) an dem Anbringmittel (15) angeordneten Entleerungsrutsche (16) zugeordnet ist.

4. Einzelkornsäaggregat nach Anspruch 3, **dadurch gekennzeichnet, dass** das Leitelement (19) vorzugsweise mittels einer eine in Arbeitsrichtung (F) des Einzelkornsäaggregates (3) weisenden Schwenkachse (20) aufweisenden Schwenkanordnung vorzugsweise an dem Anbringmittel (15) und/oder dem Gehäuse (7) unterhalb der Entleerungsöffnung (13) angeordnet und wahlweise in die eine oder andere seitliche Entleerungsrichtung (21, 22) in einstellbarer Weise schwenkbar ist.

5. Einzelkornsäaggregat nach zumindest einem der vorstehenden Ansprüche, **dadurch gekennzeichnet, dass** das Anbringmittel (15) als Adapter ausgebildet und mittels Befestigungsmitteln an dem Gehäuse (7) angeordnet ist.

6. Einzelkornsäaggregat nach zumindest einem der vorstehenden Ansprüche, **dadurch gekennzeichnet, dass** der Saatgutleitbereich des Anbringmittels (15) eine geneigte Rutschfläche von der Entleerungsöffnung (13) zu der Entleerungsrutsche (16) aufweist.

7. Einzelkornsäaggregat, nach zumindest einem der vorstehenden Ansprüche, wobei das Gehäuse (7) einen seitlich abnehmbaren Deckel (18) aufweist, wobei das Vereinzelungselement (8) nach Abnahme des abnehmbaren Deckels (18) von dem Gehäuse (7) aus dem Gehäuse (7) herausnehmbar ist, **dadurch gekennzeichnet, dass** das nach Abnahme des abnehmbaren Deckels (18) von dem Gehäuse (7) und der Herausnahme des Vereinzelungselementes (9) aus dem Gehäuse (7) der Saatgutvorratsraum (13) über die an dem Anbringmittel (15) auf der Seite des Gehäuses (7), auf der das Gehäuse (7) durch den abnehmbaren Deckel (18) geöffnet ist, angeordnete Entleerungsrutsche (16) entleerbar ist.

## Claims

1. Single-grain sowing unit (3) of a single-grain seeder having at least one single-grain sowing unit (3), with at least one assigned storage container (5), with a housing (7) and a separating element (9), which is arranged and driven in the housing (7), with a seed storage compartment (10) which is located in the housing (7) and in which seed from the storage container (5) is supplied by means of suitable means from the storage container for separating by the separating element (9), and with at least one seed emptying opening (13) which is located in the lower region of the housing (7) in the region of the seed storage compartment (10), is closable by means of a closure plate (14) and can be opened for emptying the seed located in the seed storage compartment (10), wherein an obliquely downwardly inclined emptying chute (16) leading away from the seed emptying opening (13) of the housing (7) can be attached to the outer side of the housing (7) by means of suitable attachment means (15), **characterized in that** the emptying chute (16) can be optionally attached on one of the two opposite sides of the housing (7) of the separating unit (3) by means of the attachment means (15).

2. Single-grain sowing unit according to Claim 1, **characterized in that** the attachment means (15) which are attached to the housing (7) have, at least with regard to one side of the housing (7), a seed-directing region as an intermediate chute between the emptying opening (13) and the beginning of the emptying chute (16).

3. Single-grain sowing unit according to at least one of the preceding claims, **characterized in that**, in the region directly below the emptying opening (13), the attachment means (15) is assigned a directing element (19) for optionally setting the direction (21, 22) of emptying via the emptying chute (16) to the one or other side of the housing (7) emptying chute (16) arranged on the attachment means (15).

4. Single-grain sowing unit according to Claim 3, **characterized in that** the directing element (19) is preferably arranged on the attachment means (15) and/or the housing (7) below the emptying opening (13) preferably by means of a pivoting arrangement having a pivot axis (20) pointing in the working direction (F) of the single-grain sowing unit (3), and is pivotable optionally in the one or other lateral emptying direction (21, 22) in an adjustable manner.

5. Single-grain sowing unit according to at least one of the preceding claims, **characterized in that** the attachment means (15) is designed as an adapter and is arranged on the housing (7) by means of fastening means.

6. Single-grain sowing unit according to at least one of the preceding claims, **characterized in that** the seed-directing region of the attachment means (15) has an inclined sliding surface from the emptying opening (13) to the emptying chute (16).

7. Single-grain sowing unit according to at least one of the preceding claims, wherein the housing (7) has a laterally removable cover (18), wherein, after removal of the removable cover (18) from the housing (7), the separating element (8) can be taken out of the housing (7), **characterized in that**, after removal of the removable cover (18) from the housing (7) and taking the separating element (9) out of the housing (7), the seed storage compartment (13) can be emptied via the emptying chute (16) which is arranged on the attachment means (15) on that side of the housing (7) on which the housing (7) has been opened by means of the removable cover (18).

## Revendications

1. Unité de semoir monograine (3) d'un semoir monograine présentant au moins une unité de semoir monograine (3), comprenant au moins un réservoir associé (5) comprenant un boîtier (7) et un élément de séparation (9) disposé et entraîné dans le boîtier (7), une chambre de stockage de semences (10) se trouvant dans le boîtier (7), dans laquelle des semences sont acheminées depuis le réservoir (5) par le biais de moyens appropriés hors du réservoir en vue de leur séparation par l'élément de séparation (9), au moins une ouverture de déversement des semences (13) se trouvant dans la région inférieure du boîtier (7) dans la région de la chambre de stockage de semences (10), qui peut être fermée au moyen d'une plaque de fermeture (14) et qui doit être ouverte pour déverser les semences se trouvant dans la chambre de stockage de semences (10), une glissière de déversement (16) inclinée obliquement vers le bas sortant du boîtier (7) depuis l'ouverture de déversement de semences (13) pouvant être montée sur le côté extérieur du boîtier (7) par le biais de moyens de montage appropriés (15),
**caractérisée en ce que** la glissière de déversement (16) peut être montée par le biais des moyens de montage (15) de manière sélective sur l'un des deux côtés opposés du boîtier (7) de l'unité de séparation (3).

2. Unité de semoir monograine selon la revendication 1, **caractérisée en ce que** les moyens de montage (15) montés sur le boîtier (7) présentent, au moins par rapport à l'un des côtés du boîtier (7), une région de guidage des semences en tant que glissière intermédiaire entre l'ouverture de déversement (13) et le début de la glissière de déversement (16).

3. Unité de semoir monograine selon au moins l'une des revendications précédentes, **caractérisée en ce qu'**un élément de guidage (19) est associé au moyen de montage (15) dans la région directement en dessous de l'ouverture de déversement (13), en vue d'un ajustement sélectif de la direction (21, 22) du déversement par le biais de la glissière de déversement (16) vers l'un ou l'autre côté du boîtier (7) glissière de déversement (16) disposée sur le moyen de montage (15).

4. Unité de semoir monograine selon la revendication 3, **caractérisée en ce que** l'élément de guidage (19), de préférence au moyen d'un agencement de pivotement présentant un axe de pivotement (20) orienté dans la direction de travail (F) de l'unité de semoir monograine (3), est de préférence disposé au niveau du moyen de montage (15) et/ou au niveau du boîtier (7) en dessous de l'ouverture de déversement (13) et peut pivoter de manière ajustable de manière sélective dans l'une ou l'autre direction de déversement latérale (21, 22) .

5. Unité de semoir monograine selon au moins l'une des revendications précédentes, **caractérisée en ce que** le moyen de montage (15) est réalisé sous forme d'adaptateur et est disposé sur le boîtier (7) par le biais de moyens de fixation.

6. Unité de semoir monograine selon au moins l'une des revendications précédentes, **caractérisée en ce que** la région de guidage des semences du moyen de montage (15) présente une surface de glissière inclinée allant de l'ouverture de déversement (13) jusqu'à la glissière de déversement (16).

7. Unité de semoir monograine selon au moins l'une des revendications précédentes, dans laquelle le boîtier (7) présente un couvercle (18) pouvant être enlevé latéralement, l'élément de séparation (8), après l'enlèvement du couvercle amovible (18) du boîtier (7), pouvant être retiré du boîtier (7), **caractérisée en ce qu'**une fois que le couvercle amovible (18) est enlevé du boîtier (7) et que l'élément de séparation (9) est retiré du boîtier (7), la chambre de stockage de semences (13) peut être vidée par le biais de la glissière de déversement (16) disposée sur le moyen de montage (15) sur le côté du boîtier (7) sur lequel le boîtier (7) est ouvert par le couvercle amovible (18).
